Europäisches Patentamt

European Patent Office

Office européen des brevets

(11) Publication number: **0 076 397**
**B1**

(12) **EUROPEAN PATENT SPECIFICATION**

(45) Date of publication of patent specification: **02.01.86**

(51) Int. Cl.⁴: **C 10 L 5/48, C 10 C 3/02**

(21) Application number: **82108451.4**

(22) Date of filing: **14.09.82**

(54) Method for the safe removal of acid sludge obtained from petroleum fractions, and for its conversion particularly into solid fuel.

(30) Priority: **06.10.81 IT 2434381**

(43) Date of publication of application:
**13.04.83 Bulletin 83/15**

(45) Publication of the grant of the patent:
**02.01.86 Bulletin 86/01**

(84) Designated Contracting States:
**AT BE CH DE FR GB LI LU NL SE**

(56) References cited:
**DE-A-1 471 600**
**DE-A-2 241 524**
**FR-A- 859 043**

(73) Proprietor: **SISTEMA ECODECO S.r.l.**
**Via dei Partigiani, 4**
**Bergamo (IT)**

(72) Inventor: **Bossi, Carlo**
**Via Battisti 21**
**Sesto S. Giovanni Milano (IT)**
Inventor: **Del Frate, Giorgio**
**Via Mameli, 4**
**Milan (IT)**
Inventor: **Natta, Giuseppe**
**Villa Favorita**
**S. Angelo Lodigiano Milano (IT)**
Inventor: **Pasquon, Italo**
**Via Durazzo, 5**
**Milan (IT)**

(74) Representative: **Notarbartolo, Manfredi et al**
**Studio Brevetti e Marchi NOTARBARTOLO &**
**GERVASI Viale Bianca Maria, 33**
**I-20122 Milano (IT)**

Courier Press, Leamington Spa, England.

## Description

This invention relates to the recovery of carbonaceous substances, particularly as solid fuel, from acid sludge of solid or pitch-like consistency deriving from the sulphuric acid treatment of petroleum fractions.

The invention also relates to the removal of said sludge from the relative dumps under conditions of safety (without the emission of harmful gases).

Because of its considerable calorific value (higher calorific value 3500—5500 Kcal/kg), the product obtained by means of the invention can be used as an unconventional fuel either alone or in mixture with other fuels, either in conventional plants for burning coal in lump or pulverised form, or in plants designed for this purpose.

A problem of some importance for the ecological system is the presence, within production processes, of the acid treatment of petroleum fractions and in particular the acid regeneration treatment of lubricating oils. The byproducts of these processes are large quantities of partially sulphonated organic residues containing sulphuric acid in relatively high percentages.

The regeneration treatment leads to the sulphonation of hydrocarbons. Acid sludge deriving from free sulphuric acid and sulphonic acids is therefore present which, when disturbed, releases large quantities of sulphur dioxide into the environment surrounding the deposit. In industrial zones there frequently exist dumps (e.g. abandoned quarries used for dumping purposes) in which this sludge, which has hardened to varying degrees according to the time for which it has been present, represents both an ecological problem and at the same time a potential source of unconventional fuel.

The literature relative to the treatment of waste from used oil regeneration processes reports only a few methods for the controlled dumping or disposal of acid sludge.

Some of these methods relate to the recovery of neutralised sulphuric acid from said sludge by an extractive method, to the disposal of the sludge simultaneously with used oil emulsions in order to recover the total oil phase, and to the production of ammonium sulphate.

None of the proposed methods succeeds in solving the problem of the removal of sludge from dumps or deposits without giving rise to the emission of harmful gases.

The direct use of said sludge as a fuel or its thermodestruction are not possible, because of the impossibility of removing it as such without giving rise to harmful emissions, because of the high acidity of the product which would be dangerous for the processing plants, and because of its high sulphur content which would be dangerous for conventional incineration furnaces, and a possible solution is therefore to make the sludge inert by neutralising its acidity and at the same time completely solidifying it into a friable product, using a specific plant for converting the acid sludge into fuel similar to coal.

The disposal method proposed by the Japanese kokai patent application 73/94670 consists of the controlled neutralisation of fluid acid sludge, such as the sludge discharged from used oil regeneration processes, by using slaked lime containing more than 50% of water which then has to be evaporated. After neutralisation, the product is incinerated at a temperature exceeding 500°C.

The present invention is different from that stated and from other known methods, in that it constitutes an integrated system which makes it possible to treat acid sludge not only at the production stage but also in dumps or deposits where it exists in a pitch-like or solid state.

In this respect, in this latter case it has been found impracticable to carry out complete neutralisation of pitch-like or solid sludge directly on the deposit for obvious ecological reasons. In such a case, the sludge has to be conveyed, under safety conditions, into a plant able to carry out the neutralisation.

The method according to the present invention consists essentially of two main processing stages, namely the removal of the material from the deposit and its neutralisation treatment.

When it comes into contact with air, the dumped material produces gaseous emissions consisting of sulphur oxides and volatile hydrocarbon fractions.

The operation must therefore be carried out under safety conditions by preventing the escape of any physically or chemically toxic gas.

It has been surprisingly found that the desired effect can be obtained by covering, in situ, the surface of the solid or pitch-like material in the form of coarse pieces, with a layer of a powdery substance having basic characteristics.

It has been found that by adhering to the surface of the solid or pitch-like material, said powdery substance creates a physical barrier to the escape of gas, and at the same time reacts both with the surface acidity and with the gaseous sulphur oxides.

As a side-effect of said operation, it has been found that the material which has just been removed and conveyed is prevented from amalgamating in the short term to give a single block.

As an alternative to this method, it is possible to "flood" the solid or pitch-like material constituted by coarse pieces of acid sludge, with an aqueous solution, dispersion or suspension of basic substances which react with the acidity of the sludge to form a saline surface incrustation.

In this case, it has been found that the sulphur oxides which are released are fixed in the basic aqueous suspension, thus preventing harmful emission.

The water of the solution is removed by evaporation by virtue of the considerable exothermic level of the sludge neutralisation reaction.

In the second processing stage, the pretreated material is fed in metered quantities for example into a Banbury mixer, in which it is completely neutralised.

In order to obtain this result, the sludge is mixed with a metered quantity, representing a slight excess over the stoichiometric neutralisation quantity, of a basic substance in powder form or of pasty consistency. The mixing must continue until the components are completely mixed together, removing the heat of reaction if necessary.

In this respect, the effect of the evolved heat is to soften the sludge material until it actually melts.

The temperature conditions can vary between 35°C and 150°C so as to attain partial softening in order to facilitate mixing, but without reaching temperatures which would subsequently require excessive cooling of the mass, once neutralised.

The neutralised product leaving said Banbury mixer can thus be cooled by air or water by increasing its heat transfer surface by suitable rolling and/or extrusion. The reaction can be carried out either continuously or batchwise, using machinery able to resist both the acidity and the abrasive action of any foreign bodies in the reaction mass (e.g. gravel).

The specific plant must comprise a system for venting and collecting the gas which is given off as the sludge heats up during the initial stage of the neutralisation, and this gas must be subsequently removed by means of a suitable purification system.

It has also been surprisingly observed that the acid sludge neutralised and cooled in this manner, having acquired a fragile solid consistency during these operations, can be ground without special difficulty to give a fuel of a required particle size with characteristics such as not to re-agglomerate during storage, and having a calorific value dependent on the quantity and nature of the neutralisation agent used.

The neutralisation agents which can be used include both raw materials such as lime (calcium oxide or hydroxide), calcium carbonate, mixtures of lime and alkaline-earth carbonates or other inorganic bases, or organic or inorganic industrial recovered material (e.g. purification sludge having basic characteristics etc.).

As already said above the method of this invention consists essentially of two main processing stages.

In detail, the method is directed to the safe removal of acid sludge obtained from petroleum fractions, in the solid or pitch-like state, and for its conversion particularly into solid fuel and comprises the following stages:

a) removal of acid sludge in bulk and breaking it down into blocks or pieces of any size, under a blanket of powdery material having basic properties in order to obtain a surface chemical neutralization of the solid material thereby avoiding emission of harmful gases from said acid sludge;

b) complete chemical neutralization of the material obtained in stage a) by mixing with basic substances in excess over the stoichiometric value, so as to raise the temperature to between 35° and 150°C and convert the material into a melt; and

c) cooling the neutralized material and grinding it into small pieces.

With reference to point (a) we note that the stages of removal, breaking and neutralization may follow in different succession according to the size and to displacement of the dumps, and preferably neutralization occurs contemporaneously with the removal and breaking up of the solid acid sludge.

The invention is further illustrated by the nonlimiting examples given hereinafter:

### Example 1

500 g of acid sludge in large pieces and of plastic consistency were treated in the laboratory with a 50% mixture of calcium carbonate and calcium hydroxide, the sludge being reduced to medium sized pieces (about 50 mm) under a layer of about 200 g of the said powder.

In this manner, a material was obtained with its surface covered by a thin layer of neutralising powder which did not shown any escape of gas and could be handled with safety.

It was separated from the excess neutralising agent in powder by sieving, and was then added to 100 g of quicklime (calcium oxide) in the hopper of an extruder and then extruded to obtain, on cooling in air, a neutral mass of fragile consistency free from acid gas emission, which could be easily reduced either to a powder or fine particles not subject to subsequent resoftening or reagglomeration.

The product thus obtained has a higher calorific value of 4500 Kcal/kg, and could be considered to be a good replacement or additional fuel.

### Example 2

The test was carried out by the method of example 1, and a mixture of powdered clay and calcium oxide (80:20) was used as the surface neutralising agent.

The clay favoured the adhesion of the neutralising powder to the surface of the acid sludge. Again in this case there was no gas development after the surface treatment. The physical characteristics of the obtained final product were similar to those of the product obtained in example 1.

### Example 3

The test was carried out following the method of example 1, and a quantity of residual carbonaceous sludge (carbon black) equal to the weight of the acid sludge was added in the extruder to the surface-treated sludge and to the neutralisation quicklime.

As carbon black is a good fuel, the neutralisation product, after losing its water by evaporation, was found to have a higher calorific value of 4200 Kcal/kg, thus enabling a further industrial by-product to be disposed of while recovering its energy.

## Example 4

The test was carried out as in Example 2, and the neutralising agent used in the extruder was an organic and inorganic industrial sludge of basic characteristics due to iron oxide, the quantity used being equal to the weight of the acid sludge so as to obtain a fuel of which the calorific value was kept at a high level, in this case about 3000 Kcal/kg, while at the same time disposing of a further industrial by-product, for example filtration sludge.

The water contained in the sludge was removed during extrusion by the heat evolved in the reaction.

The final product obtained had physical characteristics similar to those of the product obtained in example 1.

## Example 5

500 g of acid sludge were "flooded" with milk of lime (composition: 20% by weight $Ca(OH)_2$ in $H_2O$) and after reducing to medium particle size were removed from the neutralising liquid.

The formation of a compact layer of calcium hydroxide and calcium sulphate was noted on the surface of the pieces due to the evaporation of the water favoured by the heat evolved by the neutralisation reaction.

Again in this case there was no gas development.

This material was then treated as in example 1.

The final product obtained had characteristics similar to those of the product obtained in example 1.

## Example 6

1 $m^3$ of sludge material was removed under a blanket of calcium carbonate and calcium oxide powder and broken down on the surface of an acid sludge dump. During this operation, there was no emission of sulphur dioxide from said sludge.

The material, in the form of coarse pieces, was then mixed in situ mechanically with about 300 kg of lumps of quicklime in a tank which was then covered with a layer of earth. The heat of neutralisation, by causing the sludge to melt, had facilitated its mixing with the lime, thus leading to neutralisation of the acid mass.

The material was able to be withdrawn after cooling and removing the covering earth.

During this operation there was no emission of said gases, and the product obtained at the end of treatment had characteristics similar to those of the product obtained in example 1.

## Example 7

150 kg of acid sludge taken from a dump as in example 5 were treated with 30 kg of powdered quicklime in a mixer with rotors counter-rotating at a speed of 60 r.p.m. for a time of one minute, while cooling the mass (by cooling the shell and rotors) so as to keep the temperature at 45°C.

The discharged material, which was of pasty consistency and still hot, was rolled by passing it between two water-cooled rollers, left to harden and then ground to medium particle size to give a product which was inert, odourless and miscible with coal.

## Example 8

The test was carried out as in example 6, and the acid sludge was neutralised with a mixture of lumps of quicklime and calcium carbonate ash from an electrostatic precipitator (in the ratio of 1:1) while allowing the reaction in the mixer to proceed for two minutes and maintaining its temperature at 80°C.

The product obtained had physical characteristics similar to those of the product obtained in example 6.

## Example 9

The test was carried out in a manner similar to example 8, but the temperature was allowed to rise to 160°C. However, under these conditions the temperature tended to rise so rapidly that it was difficult to control.

## Claims

1. A method for the safe removal of acid sludge obtained from petroleum fractions, in the solid or pitch-like state, and for its conversion particularly into solid fuel, comprising the following stages:

a) removal of acid sludge in bulk and breaking it down into blocks or pieces of any size under a blanket of powdery material having basic properties in order to obtain a surface chemical neutralization of the solid material thereby avoiding emission of harmful gases from said acid sludge;

b) complete chemical neutralization of the material obtained in stage a) by mixing with basic substances in excess over the stoichiometric value, so as to raise the temperature to between 35°C and 150°C and to convert the material into a melt; and

c) cooling the neutralized material and grinding it into small pieces.

2. A method as claimed in claim 1, wherein the surface neutralization is carried out by flooding the acid sludge with an aqueous solution, dispersion or suspension having basic characteristics.

3. A method according to claim 1 or 2, wherein the basic material contains one or more components chosen from calcium carbonate, calcium oxide, calcium hydroxide, iron hydroxide and suitable industrial and civil waste products such as sludge from purification processes having basic characteristics, or other products containing one or more of the said basic substances.

4. A method as claimed in claim 1, wherein the material obtained by complete neutralisation of the acid sludge has such consistency and calorific value characteristics as to be able to be used as a fuel replacing or additional to coal in suitable plants.

## Revendications

1. Procédé pour l'extraction sans danger de boues acides obtenues de fractions du pétrole, à l'état solide ou poisseux, et pour leur conversion plus particulièrement en combustible solide, comprenant les phases suivantes:

a) extraction des boues acides en vrac et leur fragmentation en blocs ou morceaux de grosseur quelconque sous une couverture de matière en poudre ayant des propriétés basiques, afin d'obtenir une neutralisation chimique superficielle de la matière solide et d'éviter ainsi l'émission de gaz nocifs à partir de ces boues acides;

b) neutralisation chimique complète de la matière obtenue dans la phase a), par mélange avec des substances basiques en excès par rapport à la valeur stoechiométrique, ce qui a pour effet d'élever la température à une valeur comprise entre 35°C et 150°C et de convertir la matière en un produit fondu; et

c) refroidissement de la matière neutralisée et son broyage en petits morceaux.

2. Procédé selon la revendication 1, dans lequel la neutralisation superficielle est effectuée par inondation des boues acides avec une solution, dispersion ou suspension aqueuse ayant des caractéristiques basiques.

3. Procédé selon la revendication 1 ou 2, dans lequel la matière basique contient un ou plusieurs composants choisis parmi le carbonate de calcium, l'oxyde de calcium, l'hydroxyde de calcium, l'hydroxyde de fer et des produits de déchet industriels et civils appropriés, tels que les boues issues de traitements de purification et ayant des caractéristiques basiques ou d'autres produits contenant une ou plusieurs desdites substances basiques.

4. Procédé selon la revendication 1, dans lequel la matière obtenue par neutralisation complète des boues acides a des caractéristiques de consistance et de valeur calorifique telles qu'elle est susceptible d'être utilisée comme combustible de remplacement ou d'addition pour le charbon dans des installations appropriées.

## Patentansprüche

1. Verfahren zur sicheren Entfernung von aus Erdölfraktionen erhaltenem Säureschlamm in festem oder pechartigem Zustand und zu seiner Uberführung insbesondere in festen Brennstoff, welches die folgenden Stufen umfaßt:

a) Entfernung von Säureschlamm in der Masse und dessen Zerkleinern zu Blöcken oder Stücken beliebiger Größe unter einer Decke von pulverförmigem Material mit basischen Eigenschaften, um eine oberflächliche chemische Neutralisation des festen Materials zu erzielen, wodurch die Emission von schädlichen Gasen von dem genannten Säureschlamm vermieden wird;

b) vollständige chemische Neutralisation des in Stufe a) erhaltenen Materials durch Mischen mit basischen Substanzen in einem Anteil, der den stöchiometrischen Wert übersteigt, um die Temperatur auf zwischen 35 und 150°C zu erhöhen und das Material in eine Schmelze überzuführen; und

c) Abkühlen des neutralisierten Materials und Mahlen desselben zu kleinen Stücken.

2. Verfahren, wie in Anspruch 1 beansprucht, worin die Oberflächenneutralisation durch Überschwemmen des Säureschlamms mit einer wässerigen Lösung, Dispersion oder Suspension mit basischen Charakteristika durchgeführt wird.

3. Verfahren gemäß Anspruch 1 oder 2, worin das basische Material eine oder mehrere Komponenten ausgewählt aus Kalziumcarbonat, Kalziumoxid, Kalziumhydroxid, Eisenhydroxid und geeigneten Industrie- und Privatabfallprodukten, wie Schlamm von Reinigungsverfahren mit basischen Charakteristika, oder anderen Produkten, die eine oder mehrere der genannten basischen Substanzen enthalten, enthält.

4. Verfahren, wie in Anspruch 1 beansprucht, worin das durch vollständige Neutralisation des Säureschlamms erhaltene Material derartige Konsistenz und Heizwertcharakteristika aufweist, daß es als Brennstoff, der Kohle ersetzt oder zusätzlich zu Kohle in geeigneten Anlagen verwendet werden kann.